# Europäisches Patentamt

## European Patent Office

## Office européen des brevets

(11) Publication number: **0 086 567 B1**

(12) **EUROPEAN PATENT SPECIFICATION**

(45) Date of publication of patent specification: **03.09.86**

(51) Int. Cl.⁴: **E 03 F 3/06**, F 16 L 1/02, F 16 L 55/16

(21) Application number: **83300268.6**

(22) Date of filing: **19.01.83**

(54) Pipe replacement.

(30) Priority: **22.01.82 GB 8201902**

(43) Date of publication of application:
**24.08.83 Bulletin 83/34**

(45) Publication of the grant of the patent:
**03.09.86 Bulletin 86/36**

(84) Designated Contracting States:
**AT BE CH DE FR GB IT LI LU NL SE**

(56) References cited:
**CH-A- 595 514**
**DE-A-2 129 296**
**GB-A- 786 012**
**US-A-3 181 302**
**US-A-3 422 631**

(73) Proprietor: **WATER RESEARCH CENTRE**
**P.O. Box 16 Henley Road Medmenham**
**Marlow Buckinghamshire SL7 2HD (GB)**

(72) Inventor: **Marsh, John**
**50 Longfield Avenue High Halstow**
**Rochester Kent (GB)**

(74) Representative: **Prentice, Raymond Roy**
**R.R. Prentice & Co. 34 Tavistock Street**
**London WC2E 7PB (GB)**

Courier Press, Leamington Spa, England.

## Description

This invention relates to apparatus for use in the replacement of existing underground pipework which may be blocked or damaged.

Until now, if existing pipework was to be replaced, it was necessary to excavate down to the pipework, to remove said pipework and to replace it by new pipework. Such a method is extremely time-consuming and costly. Further, where the pipework crossed a road, railway line, river or other geographical barrier considerable disruption of traffic or of the railway timetable was caused during the excavation work.

It has previously been proposed, in U.S. Patent Specification No. US—A—3181302, to replace existing underground pipework by means of a mechanism which included means for slitting and spreading the existing pipe and then pulling a new pipe through the spread apart halves of the existing pipe, whereby the new pipe occupied the position of the existing pipe. The slitting means took the form of a pipe cutter formed of two sections each carrying a plurality of rotatably mounted cutting discs which served to cut through an existing pipe. The split pipe was then spread apart by a spreader, the cutter and spreader being drawn through the pipe by a cable driven by winch. While such a mechanism can be used for the replacement of pipes of relatively soft material, such as lead or plastics, it is not considered suitable for replacing pipes of cast iron or salt glazed ceramic material.

It is known to bore holes in the ground by percussive drive means such as an impact mole and one such method of boring such holes is disclosed in Swiss Patent Specification No. CH—A—595514. In this prior arrangement, a pilot bore is formed by an impact mole having an extension tube of small diameter projecting from its front end. The bore is formed by fitting successive extension tubes to the front end of the mole until the desired length of bore has been achieved. The bore is then enlarged by driving the mole itself, which has a larger diameter, through the pilot bore. It is not considered that this arrangement could be adapted for replacing existing underground pipework.

German Offenlegungsschrift No. DE—A—2129296 discloses a method of replacing existing underground pipework in which an expansion member is drawn through an existing pipe which serves to expand the pipe and to permit a replacement pipe to be drawn along behind it. This prior suggestion does not, however, envisage the use of a percussive drive means to break out the existing pipework.

It has also been proposed, in British Patent Specification No. GB—A—2092701, to replace existing gas mains by means of an impact mole which is used to fracture the walls of an existing pipe and to tow a length of replacement pipe along the bore created by the mole. Such apparatus can, however, only be used to replace pipes within a limited range of diameters. While this may be satisfactory for replacing gas mains, different problems arise in the water and sewage industries in which pipes of widely differing diameter are used. Thus, a whole range of impact moles of different diameters would be required to replace pipes of widely different diameters if the apparatus disclosed in British Patent Specification No. GB—A—2092701 were to be utilized.

The present invention aims to provide an apparatus for use in replacing existing underground pipes which is capable of universal application and which is cheaper than the apparatus previously used.

According to the invention, there is provided apparatus when used in replacing an existing underground pipe, said apparatus comprising a conical or frusto-conical member, the smaller end of said member being arranged to have a smaller diameter than the internal diameter of a pipe which is to be replaced and the larger end of said member being arranged to have a diameter at least as great as the external diameter of the said pipe, characterised in that the apparatus further comprises a jacket secured to the larger end of said conical or frusto-conical member, percussive drive means having a front end arranged to engage with the inner surface of the conical or frusto-conical member for driving the said member into the pipe to cause the latter to be forced radially outwards and compressed into ground surrounding the existing pipe by the forward movement of the conical or frusto-conical member and jacket, an impact locking ring arranged to be engaged by the rear end of said percussive drive means and means for securing a section of replacement pipe to the apparatus comprising a ring secured to the rear face of said conical or frusto-conical member and adapted to be connected to a pipe section, said ring extending between the jacket and the percussive drive means.

By means of the apparatus according to the invention, it is possible to drive an expander into an existing pipeline with sufficient force to deform the pipe outwardly so that the pipe is compressed into the surrounding ground and to feed a new pipe into the space formerly occupied by the existing pipeline. Some pipes are set in concrete and the term "ground" where used in this specification is intended to include concrete or indeed any material surrounding an existing pipeline. The expander should be driven with sufficient force to ensure that the existing pipe can be deformed radially outwardly and compressed into the surrounding material.

Preferably, the percussive drive means comprises an impact mole. The inner surfaces of the conical or frusto-conical member and the locking ring are desirably provided with conical surfaces with which the ends of the mole are engageable.

Preferably, a frusto-conical member is provided and the mole is provided with a probe which is arranged to project through the smaller end of said frusto-conical member to correctly align the mole with said member.

The conical or frusto-conical member acts as an expander cone and is desirably provided with a probe adapted to fit into an existing pipe for guiding the apparatus. The probe projects from the conical surface of the member between its larger and smaller ends or from the smaller end when said member is frusto-conical.

The apparatus may further include means for applying compression to the replacement pipe, said compressing means comprising a flexible connection between the locking ring and a rod consisting of a plurality of sections and a ram arranged to act on the rod to apply tension to the locking ring thereby compressing the replacement pipe between said locking ring and the ram.

The invention will now be further described, by way of example, with reference to the drawings, in which:—

Fig. 1 is a vertical section through one embodiment of an apparatus according to the invention;

Fig. 2 illustrates the front part of the apparatus shown in Fig. 1 in use in breaking up an existing pipe according to the method of this invention; and

Fig. 3 is a vertical section through a second embodiment of an apparatus according to the invention.

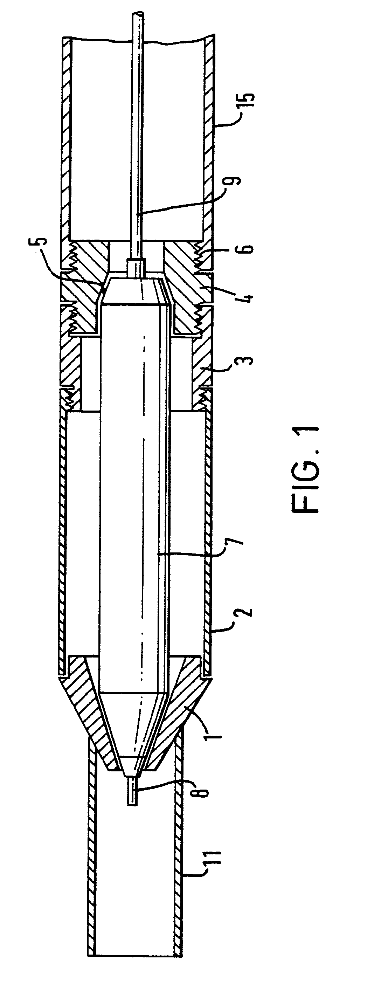

Reference will first be made to Fig. 1 of the drawings in which the apparatus comprises a frusto-conical member in the form of an expander cone 1 to the larger end of which is secured an expander casing 2 in the form of a cylindrical jacket. The end of the casing 2 remote from the cone 1 is provided with an internal screw-thread for engagement with an external screw-thread on a spacer sleeve or collar 3. The collar 3 is in turn provided at its end remote from the casing 2 with an internal screw-thread for engagement with an external screw-thread on a locking ring 4. The collar 3 may, on occasions, be omitted in which case the locking ring 4 will be screwed directly to the casing 2.

Located inside the casing 2 is an impact mole 7 having at its front end a probe 8 which projects through a bore at the smaller end of the cone 1. The locking ring 4 is provided with a conical surface 5 which is adapted to engage the rear end of the mole 7 to force the latter into engagement with the inner surface of the cone 1 as the locking ring 4 is tightened onto the collar 3. The mole 7 is thus firmly held within the casing 2. A pneumatic line 9 for the air feed to the mole passes through the ring 4 and is connected to an air compressor (not shown).

The collar 3 may be omitted if a shorter mole is used. Alternatively, the collar may be replaced by a larger collar or supplemented by an additional collar if a larger mole is used.

As is known to those skilled in the art, an impact mole is driven by compressed air and it has a large heavy piston which is arranged to strike the end of the cylinder in which it is located. Speeds of up to 420 strokes per minute can be achieved. As a result of these impacts, the mole tends to move forward. As soon as the tip of the unit penetrates the ground, side wall friction between the cylinder and the earth acts as a thrust wall and the impact mole travels forwards at speeds of up to 60m per hour.

In the apparatus shown in Fig. 1, the cylinder of the mole 7 is located within the casing 2. However, the mole is firmly held in the casing by its engagement with the cone 1 and locking ring 4. The expander cone 1 and the casing 2 can therefore act as the cylinder of the mole in creating a thrust wall.

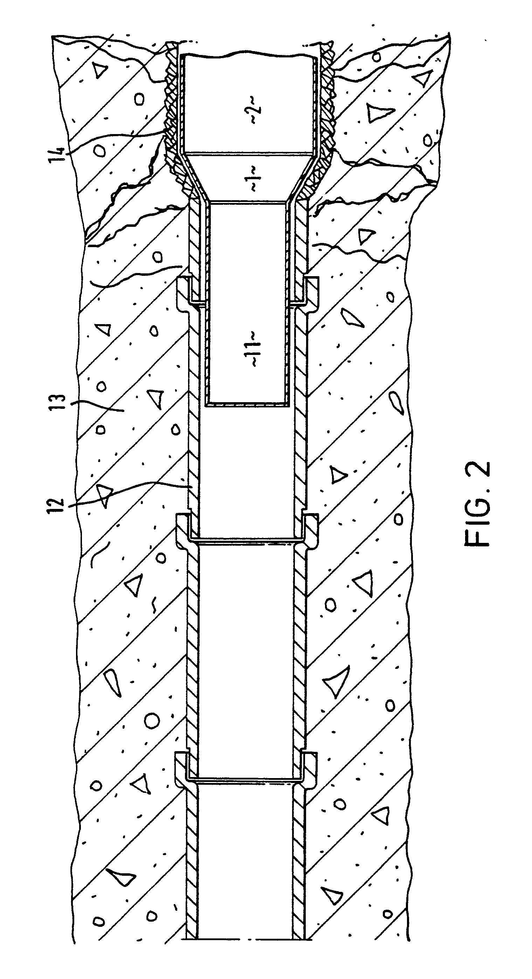

Fig. 2 shows the apparatus in use in which a cylindrical probe 11 projecting from the cone 1 is inserted into the end of a pipe which is to be replaced. The probe 11 serves to align the apparatus with the pipe 12. The casing 2 is held by suitable means, such as a mole launcher which is known in the art, and the mole is set in operation. Successive impacts by the piston of this unit will serve to drive the expander cone 1 into the pipe 12 which, as shown in Fig. 2, will force the pipe 12 radially outwardly to be compressed into the surrounding material 13. Once the casing 2 enters the expanded bore 14, it can be released from the holding means and it will then frictionally engage the walls of the bore. Exaggerated clearances are shown in Fig. 2 for both the probe 11 and the casing 2 but in actual fact the probe 11 will be a close fit in the pipe 12 for guidance purposes and the casing 2 will be a tight friction fit in the bore 14.

The locking ring 4 is provided with a further screw-thread 6 by means of which a replacement pipe 15 can be secured to the apparatus and drawn into the bore 14 as the apparatus is advanced along the existing pipeline. In this manner, an existing pipe can readily be replaced. At the end of the pipe, the line 9 can simply be disconnected from the mole 7 or from the compressor and drawn through the new pipe 15 in the appropriate direction after which the new pipe is ready for use once any necessary connections have been made at its ends.

The expander cone 1 is preferably machined out of a solid piece and has an internal taper suitable for engagement with moles having noses of 130 mm, 155 mm or even larger diameter. Similarly, the conical surface 5 on the locking ring 4 should preferably also have a taper which is suitable for engagement with both 130 mm and 155 mm diameter moles although separate locking rings for different diameters of mole may be provided if desired or considered advisable.

The mounting of the mole 7 in the casing 2 is such that the unit can be driven in reverse if required. This may be necessary if the apparatus should become stuck in a pipe and have to be removed by withdrawing it in the reverse direction. The reverse movement of the apparatus is possible because the mole is trapped in the casing 2 and held in place by the conical surface 5 on the locking ring 4 located at the rear of the mole 7 which converts rearward impacts of the piston of the mole into reverse motion of the casing 2 and the new replacement pipe attached thereto.

Existing sewage pipes are usually of 6, 9 or 12 inch and, exceptionally, 18 inch diameter and casings, cones and locking rings substantially corresponding to these different diameters would be required to effect replacement of all of these different diameter pipes. However, a single mole could be used thereby reducing expense.

If a pipe 12 is to be replaced by a pipe of smaller diameter, a conversion ring (not shown) may be screwed onto the screw-thread 6 of the locking ring 4 and the replacement pipe secured, e.g. by screwing, to the conversion ring.

The screw-threads on the expander casing 2 and locking ring 4, as well as on the collar 3 and conversion ring if fitted, are preferably of the square buttress type which is standard on both drilling equipment and on Demco plastics pipes.

Under certain conditions, problems may be encountered by the embodiment shown in Fig. 1 of the drawings. For example, the apparatus can tend to rotate in an anti-clockwise direction as it proceeds through the ground. This rotation can, it is believed, be attributed to dynamic torque. Further, in the case of fairly long lengths of pipe which need to be replaced, the combination of drag of the ground on the wall of the pipe being pulled in together with the impact action of the mold tend to tear apart the connections between adjacent pipe sections.

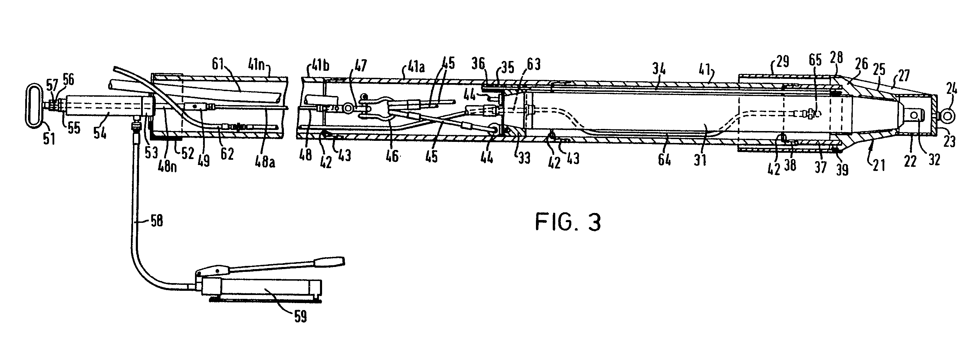

In order to overcome these problems, the apparatus shown in Fig. 3 of the drawings has been developed. As shown in Fig. 3, this embodiment of the apparatus according to the invention comprises a frusto-conical member in the form of an expander cone 21 provided, adjacent its smaller end, with a cylindrical probe 22. The end of the probe 22 remote from the cone 21 is closed by a plate 23 which is secured, e.g. by welding, to the probe and which carries a towing eye 24. The cone 21 has two tapered portions, a first portion 25 being designed to shear protruding laterals in an existing pipe without causing upward thrust and compression damage. Immediately behind the tapered portion 25 is a second tapered portion 26 having a 30° taper which is designed to thrust and expand outwards the broken section of pipe previously cracked by the tapered portion 25 of the expander cone. A plurality of fins are provided on the outer surface of the cone 21, only one 27 of which is shown in Fig. 3. Preferably, three such fins are provided, spaced apart by 120°. The fins serve to prevent the expander cone 21 from rotating while it is being driven into an existing pipe which is to be replaced. The fins also serve to impose a heavy point load on the pipe to be replaced and also on any collars or haunching that may be encountered and thus facilitate fracturing of the pipe material. In addition, the fins will cause longitudinal cracking ahead of the apparatus which will enable the expander cone to perform its function more easily.

The larger end of the expander cone 21 is provided with a substantially cylindrical portion 28 to which one end of a jacket 29 is secured by welding in such a manner that the weld fillet on the front edge is a continuation of the 30° taper of the tapered portion 25. The jacket 29 serves as a rear friction sleeve.

The interior of the expander cone 21 is provided with a bore having a 5½° taper which is adapted to receive the tapered front end of an impact mole 31. The end of the mole projects slightly from the smaller end of the cone 21 into the probe 22 and a probe 32 projecting from the front end of the mole 31 is located within the probe 22. The internal taper in the cone is not a full-face taper with the mole but is relieved along its middle section to leave approximately 25 mm contact area at the front or smaller end of the cone and a similar contact area at the rear or larger end of the cone. The reduction of the contact area is designed to prevent lock-up between the mole 31 and the expander cone 21.

Mounted on the rear end of the mole 31 is an impact locking ring 33 which is provided with a conical face engageable with the rear end of the mole and which is secured to the expander cone 21 by three steel tension bars, only one 34 of which is shown in Fig. 3. Both ends of the bars 34 are screw-threaded and one end of each bar is screwed into a respective screw-threaded bore provided in the rear face of the expander cone 21. The other ends of the bars 34 are passed through respective bores in the ring 33 and are each secured by a respective pair of lock nuts 35, 36. These nuts are circular and have offset faces the purpose of which is to provide an over-centring function when being pulled up tight. This has the effect of tensioning the thread pitches and forming a thread lock.

An annular slot is formed in the rear face of the expander cone 21 for the reception of pipe securing means in the form of a fixing ring 37. The ring 37 can be received in the slot and held in position by means of bolts 39 which are screwed into tapped bores arranged around the circumference of the substantially cylindrical portion 28 of the expander cone 21. The jacket 29 is provided with aligned bores to permit the fixing bolts 39 to pass therethrough. Preferably, three such bolts 39 are provided, spaced apart by 120°.

The rear end of the fixing ring 37, remote from the expander cone 21, has a double "snap-up" joint 38 for engagement with the leading end of a pipe section 41 provided with a co-operating joint 42, the joint 38 being male and the joint 42 being female to ensure mutual co-operation. The other end of the pipe section 41 is provided with a similar male joint 43 for engagement with a female joint 42 on a following pipe section 41a. Subsequent pipe sections 41b . . . 41n can be connected to one another by means of the joints 42, 43 in a similar manner.

Secured to the rear face of the locking ring 33 are three eye bolts 44 and wire strops 45 are shackled to the eye bolts 44. The wire strops 45 are also shackled to a central ring 46 which in turn is shackled to a fixing eye 47. The fixing eye 47 is secured to the leading end of the first of a plurality of high tensile steel rods 48 ... 48n which are secured to one another end to end by means of screw-threaded connections 49.

The rearward rod 48n has a screw-threaded eye bolt 51 which can be fixed by a shackle to a chain (not shown). A tensioning cup 52 having a hole through its centre is designed to slip over the end pipe section 41n and permits the rearward rod 48n to pass through the centre hole. A machined boss 53 is secured, e.g. by welding, to the cup 52 over the centre hole and a hydraulic ram 54 is screwed into the boss 53. A stud 55 passes down a hole in the centre of the ram 54 and is screwed onto the eye bolt 51. Adjustment is achieved by means of lock nuts 56 and 57. A hand jacking pump 59 is connected to the ram 54 by a fluid line 58 and operation of the pump is effective to extend the ram 54 and to apply tension to the locking ring 33 via the rods 48 ... 48n, the central ring 46 and strops 45.

The tensioning cup 52 is further provided with a slot to permit the passage of an air line 61 leading to the mole 31 for the purpose of driving the same. The slot in the tensioning cup 52 also permits the passage of a hose 62 leading to a bore 63 in the impact locking ring 33. Leading from the bore 63 are one or more further hoses 64 which lead to nozzles 65 in the side wall of the fixing ring 37. By means of this arrangement, it is possible to inject either Bentonite or a suitable lubricant to oil or lubricate the outer face of the pipe 41 to facilitate easier insertion in the expanded bore created by the expander cone 21.

Preferably, two diametrically-opposed nozzles 65 are provided each of which is connected by a respective hose 64 to a respective bore 63 in the locking ring 33. The bores 63 are connected together by a T-piece (not shown) which in turn is connected to a single hose 62 which leads out of the pipe through the tensioning cup 52 to a suitable pump. The hose 62 may, if desired, be supplied in suitable lengths, e.g. 10 metres, which are connected together end to end as the apparatus is advanced.

The pipe sections 41 ... 41n are preferably made of a synthetic plastics material and are each one metre in length so that they can be used as easily as possible within the confines of road manhole chambers. The overall diameter of the expander cone is desirably about 320 mm and it is preferable for the pipe sections to have an outside diameter of 250 mm in order to provide an annular clearance of 35 mm between the pipe wall and the wall of the expanded bore created by the expander cone 21. It is considered that this annular clearance is sufficient to provide room in the bore to prevent ground to pipe contact and therefore build-up of excessive surface friction between the pipe and the ground. This annular clearance is also considered to be within the tolerances to provide room for the ground to retract around the new pipe so as to dispense with the need for annular grouting to seal up any excess annular space.

The hydraulic ram 54 preferably has a capacity of 10 tons (10.16 tonnes) and, in conjunction with the tensioning cup 52, serves to hold the pipe sections 41 ... 41n together while the pipe is being inserted into the expanded bore and thus relieves tension on the joints 42, 43. As a result, the pipe sections are reliably held together while the pipe is being driven into the ground.

It will be seen that, by means of the apparatus according to the invention, existing pipes may be easily replaced without it being necessary to disrupt traffic or railways because no excavation of the road surface or railway track is necessary. Further, existing pipes can be replaced more quickly and more cheaply than by using the conventional methods of excavation.

The apparatus according to the invention is primarily intended for smashing out existing salt glazed or cast iron sewage drainage pipes and for replacing the smashed pipes with a plastics pipe of the same internal pipe as the original sewer. A suitable pipe is that sold under the Trade Mark TERRALINE by Demco Ltd. It should, however, be noted that the invention is not restricted to this use nor to use with this particular brand of pipe.

The invention is not restricted to the above described embodiments but variations and modifications may be made without departing from the scope of the invention. For example, although an impact mole is preferred as the driving means, this is not essential and other forms of percussive drive means may be utilized if desired.

**Claims**

1. Apparatus when used in replacing an existing underground pipe, said apparatus comprising a conical or frusto-conical member, the smaller end of said member being arranged to have a smaller diameter than the internal diameter of a pipe which is to be replaced and the larger end of said member being arranged to have a diameter at least as great as the external diameter of the said pipe, characterised in that the apparatus further comprises a jacket secured to the larger end of said conical or frusto-conical member, percussive drive means having a front end arranged to engage with the inner surface of the conical or frusto-conical member for driving the said member into the pipe to cause the latter to be forced radially outwards and compressed into ground surrounding the existing pipe by the forward movement of the conical or frusto-conical member and jacket, an impact locking ring arranged to be engaged by the rear end of said percussive drive means and means for securing a section of replacement pipe to the apparatus comprising a ring secured to the rear face of said conical or frusto-conical member and adapted to be connected to a pipe section, said ring extending between the jacket and the percussive drive means.

2. Apparatus according to claim 1, wherein the percussive drive means comprises an impact mole.

3. Apparatus according to claim 2, wherein the inner surfaces of the conical or frusto-conical member and the locking ring are provided with conical surfaces with which the ends of the mole are engageable.

4. Apparatus according to any preceding claim, wherein the said member is frusto-conical and wherein the driving means is provided with a probe arranged to project through the smaller end of the frusto-conical member.

5. Apparatus according to any preceding claim, wherein the conical or frusto-conical member is provided with a probe for guiding the apparatus, said probe projecting from the conical surface of the member between its larger and smaller ends or from the smaller end when said member is frusto-conical.

6. Apparatus according to any preceding claim and including means for applying compression to the replacement pipe, said compressing means comprising a flexible connection between the locking ring and a rod consisting of a plurality of sections and a ram arranged to act on the rod to apply tension to the locking ring thereby compressing the replacement pipe between said locking ring and the ram.

## Patentansprüche

1. Vorrichtung zur Verwendung beim Ersetzen eines vorhandenen, im Erdreich verlegten Rohres, wobei die Vorrichtung ein kegelförmiges oder kegelstumpfförmiges Teil, aufweist, wobei das kleinere Ende des Teiles so angeordnet ist, daß es einen kleineren Durchmesser hat als der Innendurchmesser eines zu ersetzenden Rohres, und wobei das größere Ende des Teiles so angeordnet ist, daß es einen Durchmesser hat, der mindestens ebenso groß ist wie der Außendurchmesser des Rohres, dadurch gekennzeichnet, daß die Vorrichtung weiterhin aufweist einen Mantel, der an dem größeren Ende des kegelförmigen oder kegelstumpfförmigen Teiles befestigt ist, eine Schlagbohrantriebseinrichtung mit einem vorderen Ende, das so angeordnet ist, daß es mit der Innenoberfläche des kegelförmigen oder kegelstumpfförmigen Teiles in Eingriff steht, um das Teil in das Rohr hineinzutreiben und dafür zu sorgen, daß letzteres zwangsläufig radial nach außen und in das Erdreich hineingerückt wird, welches das vorhandene Rohr umgibt, und zwar durch die Vorwärtsbewegung des kegelförmigen oder kegelstumpfförmigen Teiles und des Mantels, einen Schlagverriegelungsring, der so angeordnet ist, daß er mit dem rückwärtigen Ende der Schlagbohrantriebseinrichtung in Eingriff steht, und eine Einrichtung zur Befestigung eines Bereiches des Ersatzrohres an der Vorrichtung, die einen Ring aufweist, der an der Rückseite des kegelförmigen oder kegelstumpfförmigen Teiles befestigt und zur Verbindung mit einem Rohrbereich ausgelegt ist, wobei der Ring sich zwischen dem Mantel und der Schlagbohrantriebseinrichtung erstreckt.

2. Vorrichtung nach Anspruch 1, dadurch gekennzeichnet, daß die Schlagbohrantriebseinrichtung ein Schlagvortriebsgerät aufweist.

3. Vorrichtung nach Anspruch 2, dadurch gekennzeichnet, daß die Innenflächen des kegelförmigen oder kegelstumpfförmigen Teiles und der Verriegelungsring mit konischen Flächen versehen sind, mit denen die Enden des Vortriebsgerätes in Eingriff bringbar sind.

4. Vorrichtung nach einem der vorhergehenden Ansprüche, dadurch gekennzeichnet, daß das Teil kegelstumpfförmig ist und daß die Antriebseinrichtung mit einem Fühler versehen ist, der so angeordnet ist, daß er durch das kleinere Ende des kegelstumpfförmigen Teiles vorsteht.

5. Vorrichtung nach einem der vorhergehenden Ansprüche, dadurch gekennzeichnet, daß das kegelförmige oder kegelstumpfförmige Teil mit einem Fühler versehen ist, um die Vorrichtung zu führen, wobei der Fühler von der kegelförmigen Fläche des Teiles zwischen ihren größeren und kleineren Enden oder von dem kleineren Ende vorsteht, wenn das Teil kegelstumpfförmig ist.

6. Vorrichtung nach einem der vorhergehenden Ansprüche und mit einer Einrichtung, um das Ersatzrohr mit Druck zu beaufschlagen, wobei die Druckeinrichtung eine flexible Verbindung zwischen dem Verriegelungsring und einer Stange, bestehend aus einer Vielzahl von Bereichen, und einen Kolben aufweist, der so angeordnet ist, daß er auf die Stange wirkt, um den Verriegelungsring mit einer Spannung zu beaufschlagen und dadurch das Ersatzrohr zwischen dem Verriegelungsring und dem Kolben zu komprimieren.

## Revendications

1. Appareil qui, lorsqu'il est utilisé dans le remplacement d'un tuyau souterrain existant, comprend un organe conique ou tronconique, la plus petite extrémité de cet organe étant conçue pour avoir un diamètre plus petit que le diamètre intérieur d'un tuyau qu'il s'agit de remplacer et la plus grande extrémité de cet organe étant conçue pour avoir un diamètre au moins aussi grand que le diamètre extérieur du tuyau, caractérisé en ce qu'il comprend, en outre, une enveloppe fixée à la plus grande extrémité de l'organe conique ou tronconique, des moyens d'enfoncement à percussion ayant une extrémité antérieure conçue pour s'appliquer à la surface intérieure de l'organe conique ou tronconique pour enfoncer cet organe dans le tuyau pour faire en sorte que ce dernier soit poussé radialement vers l'extérieur et comprimé dans du sol entourant le tuyau existant par le mouvement vers l'avant de l'organe conique ou tronconique et de l'enveloppe, une bague de blocage de choc conçue pour subir l'action de l'extrémité postérieure des moyens d'enfoncement à percussion et des moyens pour fixer à l'appareil un tronçon de tuyau de remplacement, comprenant une bague fixée à la face postérieure de l'organe conique ou tronconique et conçue pour être reliée à un tronçon de tuyau, cette bague s'étendant entre l'enveloppe et les moyens d'enfoncement à percussion.

2. Appareil selon la revendication 1, dans lequel le moyen d'enfoncement à percussion comprend un corps de choc.

3. Appareil selon la revendication 2, dans lequel les surfaces intérieures de l'organe conique ou tronconique et de la bague de blocage sont munies de surfaces coniques avec lesquelles les extrémités du corps de choc peuvent coopérer.

4. Appareil selon l'une quelconque des revendications précédentes, dans lequel l'organe est tronconique et dans lequel le moyen d'enfoncement est muni d'une sonde conçue pour faire saillie à travers la plus petite extrémité de l'organe tronconique.

5. Appareil selon l'une quelconque des revendications précédentes, dans lequel l'organe conique ou tronconique est muni d'une sonde pour guider l'appareil, cette sonde faisant saillie en partant de la surface conique de l'organe, entre sa plus grande et sa plus petite extrémité ou en partant de la plus petite extrémité quand l'organe est tronconique.

6. Appareil selon l'une quelconque des revendications précédentes, et comprenant des moyens pour appliquer une compression au tuyau de remplacement, ces moyens de compression comprenant une liaison flexible entre la bague de blocage et une tige formée de multiples tronçons et un piston conçu pour agir sur la tige pour appliquer une traction à la bague de blocage, comprimant ainsi le tuyau de remplacement entre la bague de blockage et le piston.

FIG. 1

0 086 567

FIG. 2

FIG. 3

3